# EUROPEAN PATENT SPECIFICATION

(11) **EP 3 382 772 B1**
(45) Date of publication and mention of the grant of the patent: **01.06.2022**
(21) Application number: 18164796.7
(22) Date of filing: 28.03.2018
(51) Int. Cl.: H01M 50/10, H01M 50/20

(54) **MASTER BATTERY, SLAVE BATTERY, AND BATTERY KIT**
MASTER-BATTERIE, SLAVE-BATTERIE UND BATTERIESATZ
BATTERIE MAÎTRE, BATTERIE SECONDAIRE ET KIT DE BATTERIE

(30) Priority: 31.03.2017 CN 201720333448 U
(43) Date of publication of application: 03.10.2018
(73) Proprietor: Techtronic Cordless GP, Anderson, SC 29621 (US)
(72) Inventor: LI, Yong Min, Dongguan City (CN); ZHUANG, Ming Jun, Dongguan City (CN); ZHAO, Jiang, Dongguan City (CN)
(74) Representative: Novagraaf Group

(56) References cited:
- EP-A1- 2 738 863
- EP-A1- 3 147 968
- DE-A1-102015 201 574
- US-A1- 2012 219 846
- US-A1- 2014 266 000

## Description

### FIELD OF INVENTION

The invention relates to an energy storage device, in particular to battery packs for power tools.

### BACKGROUND

With the widespread application of battery packs for supplying power to DC devices such as power tools, etc., new demands have arisen on the extension of the use time of the DC device and the increase of the power, which require an increase of the capacity of the battery pack. However, existing power tools are generally unable to provide a plurality of interfaces for installing electric battery packs because of the power tool's limited dimension, but the power tool only has one such interface. Therefore, it is difficult for people to achieve an increase in the capacity of existing battery packs for power tools.

According to it's abstract, US-A-2014/266000 describes a plurality of battery pack accessories. The accessories include a battery power gauge adapted to be applied to a battery pack and provides a visual indication of the state of the charge in the battery pack, a light adapted to the battery pack such that the battery pack can be used as a flashlight when needed, a connector (e.g., a Universal Serial bus (USB) connector) that can be used for charging the battery pack or to allow the battery pack to charge a device.

According to it's abstract, EP-A-2738863 describes a battery state notifying unit readily exchangeable between battery packs differing in the number of battery cell, a bus bar module and a battery pack including the battery state notifying unit, and a battery state monitoring system including the battery state notifying unit. The battery state notifying unit includes a plurality of subunits corresponding to every battery cell, and the subunits in accordance with a cell temperature signal corresponding to a voltage outputted by a bus bar and a terminal fitting, generates a battery state data composed of a digital signal including a data indicating a state of the battery cell corresponding to the subunit, and transmits the battery state data to the external battery state monitoring unit.

### SUMMARY OF INVENTION

The invention is defined in the appended claims. The embodiments of the invention provide an improved battery pack that can overcome the above technical problem.

In one aspect, the invention provides a master battery which is adapted to be connected to an external secondary battery. The master battery includes: a case; a battery cell located in the case; a first connector on the case, and a second connector on the case. The first connector is electrically connected to the battery cell, and the first connector includes a first positive terminal and a first negative terminal. The second connector is electrically connected to the battery cell, and the second connector includes a second positive terminal and a second negative terminal.

Preferably, the master battery further contains a communication terminal on the case.

The case further contains a second mechanical structure removably attaching and securing the secondary battery to the master battery.

The case further includes a first mechanical structure for removably attaching and securing the master battery to an external charger or electrical device.

In another aspect, the invention provides a secondary battery adapted to connect to an external master battery. The secondary battery includes: a case; a battery cell located in the case; and a connecting terminal on the case. The connecting terminal is electrically connected to the battery cell. The connecting terminal includes a positive terminal and a negative terminal; wherein the secondary battery includes only one mechanical structure, which is configured for releasably attaching and securing the secondary battery to the master battery.

Preferably, the secondary battery further includes a communication terminal on the case.

In another aspect, the invention provides a battery pack including the above master battery and the secondary battery.

Preferably, in the battery pack, the master battery and the secondary battery are removably connected to each other.

The invention therefore provides a method for expanding battery pack capacity by means of mechanical connections which needs no modification to the battery interface of electrical devices such as power tools. A single battery interface can also make use of the method of expanding battery pack capacity according to the invention. The invention can greatly expand the capacity of the whole battery pack when needed by means of removably fixing the secondary battery to the master battery pack. The secondary battery can be removed from the master battery pack when a user does not need a battery pack with a large capacity or for the purposes such as light weight or weight reduction. However, the master battery pack can still be used alone, just like the battery pack of a conventional power tool.

In addition, the secondary battery in the invention have a mutually matching mechanical structure, such as a specific geometrical shape, and mutually corresponding power connecting terminals and communication terminals. Such a design not only allows the user to very easily combine the master battery and the secondary battery together, but also ensures the power terminals and communication terminals between the master battery and the secondary battery properly connected, so that they can be compatible with each other and together provide power to electrical devices.

### BRIEF DESCRIPTION OF THE DRAWINGS

The reminding part of the description and accompanying drawings are for providing further understanding of embodiments of the disclosure. In the FIG., same components have the same reference numerals. In some cases, child tags are placed after a label and hyphen to represent one of many similar components. When a reference is made to a reference numeral but an existing child tag is not specifically written clearly, the reference numeral refers to all of these similar components.
FIG. 1 shows a battery pack according to an embodiment of invention, including a master battery and a secondary battery which assembled together;
FIG. 2a shows a perspective view of the master battery of FIG. 1 alone;
FIG. 2b is a front view of the master battery in FIG. 2a;
FIG. 3a shows a perspective view of the secondary battery of FIG. 1 alone;
FIG. 3b is a front view of the secondary battery of FIG. 3a;
FIG. 4 shows a schematic view of the sliding direction of assembling the master battery and the secondary battery in FIG.1 together.

### DETAILED DESCRIPTION OF PREFERRED EMBODIMENTS

The embodiment of the invention uses a simple and reliable mechanical connection structure to combine the master battery pack and the secondary battery pack. Other various benefits and advantages provided by various embodiments of the invention will be readily apparent from the following description.

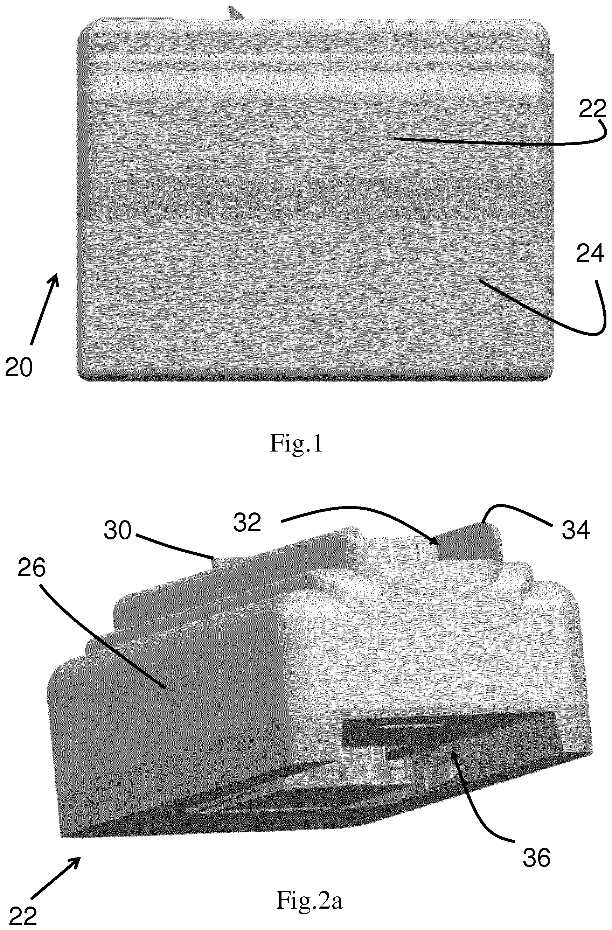

First, referring to FIG. 1, a battery pack 20 assemble into one piece can be installed as a unit on electrical equipment such as power tools (not shown). The battery pack 20 includes a master battery 22 and a secondary battery 24, which are detachably combined and fixed together. Please note that in the description, "master battery" and "master battery pack" have the same meaning and can be used interchangeably. Similarly, "secondary battery" and "secondary battery packs" have the same meaning and can be used interchangeably. The master battery 22 and the secondary battery 24 have the same output voltage while they are connected in parallel, thereby providing a larger battery capacity together.

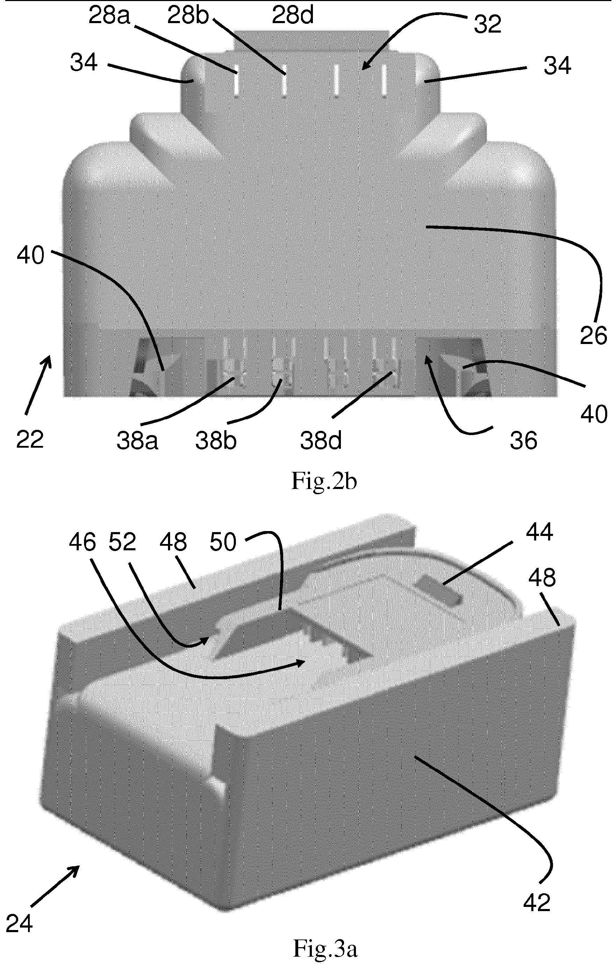

See FIGs. 2a and 2b, the master battery 22 has a shape similar to that of a conventional battery pack for a power tool. The master battery 22 has a housing 26 on the top of which a first mechanical structure is formed. The interior of the housing 26 includes a plurality of battery cells (not shown) which are connected together in series or in parallel to provide an energy storage function. The first mechanical structure includes a button 30, a terminal slot 32, and a guide wall 34. A first mechanical structure allows the master battery 22 to be mounted to an external device such as a power tool or a charger in a manner well known to those skilled in the art, and these external devices have structures corresponding to the above mentioned first mechanical structure. For example, there may be a battery receiving slot (not shown) on the charger, which allows the master battery 22 to be fixed to the charger by two guide walls 34 slidingly entering the receiving slot. The button 30 may be allowed to be pressed by a user to release the connection of the master battery 22 from the external device when needed. A terminal slot 32 includes a plurality of metal pins to form a first connection terminal, which will be described in more detail below. The above first mechanical structure is well known to a person skilled in the art and will not be described in more details here.

Figure 2b clearly shows the first connection terminal on the master battery 22, including 4 pins of the same shape and which are equidistantly spaced. These pins include a first positive terminal 28a, a first negative terminal 28d, and a first communication terminal 28b. The first positive electrode terminal 28a and the first negative electrode terminal 28d are connected to a battery cell inside the housing 26. The above-mentioned first connection terminal is adapted to be electrically connected to a corresponding terminal of an external device such as a power tool or a charger, but this only needs that the master battery 22 are correctly mounted to the external device through the above-mentioned first mechanical structure.

In addition, the master battery 22 also has a second mechanical structure and a second connection terminal at the bottom of the housing 26. The second mechanical structure includes a recess 36, and two elongated guide pins 40 located on both sides inside the recess 36. There are also four metal fixtures of the same shape and equidistantly spaced inside the recess 36. These metal clips include a second positive terminal 38a, a second negative terminal 38d, and a second communication terminal 38b. The second positive terminal 38a and the second negative terminal 38d are connected to the battery unit inside the housing 26. The above-mentioned second connection terminal is adapted to be electrically connected with the corresponding terminal on the secondary battery 20, but this only needs to properly mounting the master battery 22 together with the secondary battery through the above-mentioned second mechanical structure.

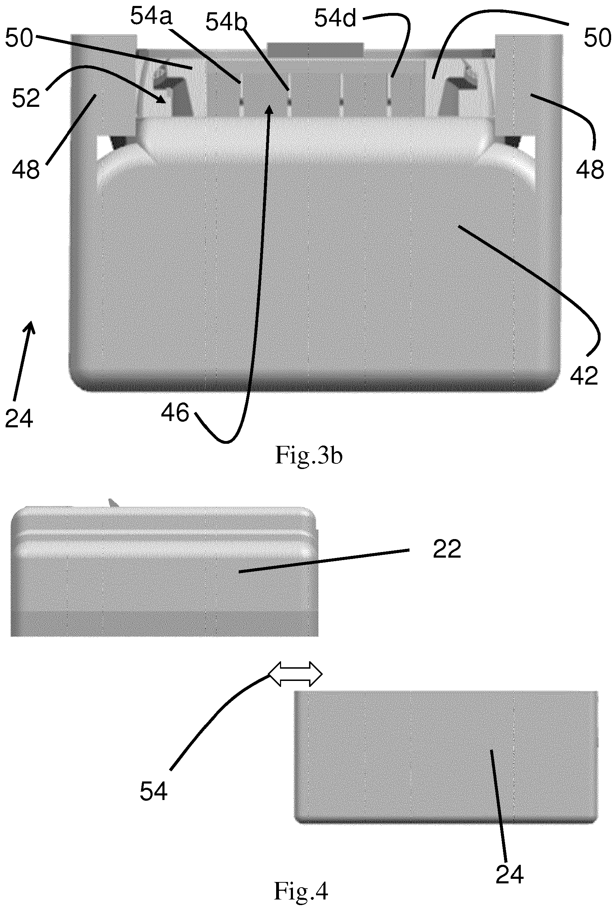

See FIGs. 3a and 3b. The secondary battery 24 has a substantially rectangular parallelepiped shape similar to that of the master battery 22. The secondary battery 24 has a housing 42 over which a mechanical structure is formed. The mechanical structure is the only mechanical structure on the entire secondary battery 24, that is, the secondary battery 24 can only be connected to the only external device (i.e., the master battery 22) through this one mechanical structure. The housing 42 has a plurality of battery cells (not shown) inside, which are connected together in series or in parallel to provide energy storage. The mechanical structure includes a button 44, a terminal groove 46, and a guide groove 52 formed by the outer wall 48 and the inner wall 50 together. Wherein the guide groove 52 is adapted to cooperate with the two elongated guide pins 40 on the master battery 22 in FIGs. 2a-2b described above to firmly mount the secondary battery 24 on the master battery 22. The button 44 may also be allowed to be pressed by the user to remove the secondary battery 24 from the master battery 22 when needed.

The terminal slots 46 include a plurality of metal pins to form connection terminals, and these connection terminals have an arrangement and definition completely corresponding to the second connection terminals in the master battery 22 described above. Specifically, the connection terminal on the secondary battery 24 includes four pins of the same shape and which are equidistantally spaced. These pins include a positive terminal 54a, a negative terminal 54d, and a communication terminal 54b. The positive terminal 54a and the negative terminal 54d are connected to a battery unit inside the housing 42.

See FIG. 4, a method of mounting the master battery 22 and the secondary battery 24 described above is illustrated. When the master battery 22 needs to be expanded in capacity, that is, when both the master battery 22 and the secondary battery 24 are in a separated state and need to be combined, they slide in a direction of the arrow 56 toward each other, and in FIG. 2b the two elongated guide pins 40 on the master battery 22 come into two guide slots 52 on the secondary battery 24, so that the master battery 22 and the secondary battery 24 are combined and fixed together. At the same time, the positive and negative terminals and the communication terminals of the second connection terminals on the master battery 22 are in contact with and electrically connected to the positive and negative terminals and the communication terminals on the secondary battery24 respectively. As a result, the master battery 22 and the secondary battery 24 are integrated from the circuit, and the increased battery pack capacity can be achieved. The communication terminals allow the master battery 22 and the secondary battery 24, or the master battery 22 and the external device to exchange information on batteries such as voltage, temperature, power, and the like.

When the user does not need the secondary battery 24, the secondary battery 24 can be released from the master battery 22. This only requires making the two batteries sliding in the direction of the arrow 54 in FIG. 4, and two elongated guide pins 40 on the master battery 22 in FIG. 2b escape respectively from the two guide grooves 52 on the secondary battery 24. As a result the master battery 22 and the secondary battery24 are detached.

Therefore, after several embodiments have been described, a person skilled in the art will recognize that various modifications and alternative constructions may be made. The above description should not be considered to limit the scope of the invention as defined by the following claims.

For example, although the first mechanical structure and the second mechanical structure on the master battery are not compatible and the structure is different, it should be understood that in other embodiments, the first mechanical structure may also be designed to be completely corresponding to that of the second mechanical structure. That is, the mechanical structures on the master battery and the secondary battery for connecting external devices may be identical, and any one of them may be directly connected to an external device such as a power tool or a charger.

Similarly, the first connection terminal and the second connection terminal located on the master battery have the same pin definitions in the above embodiments, but in other embodiments, there may be different pin arrangements and definitions. That is, the electrical connection interface used between the main and secondary batteries may be completely different from the electrical connection interface between the master battery and other external devices.

The above embodiment describes two different first and second mechanical structures on the master battery, and the mechanical structure of the secondary battery that cooperates with the second mechanical structure of the master battery. However, it should be understood by a person skilled in the art that any other possible mechanical structure for connection may include a screw connection, a key pin connection, an elastic snap, a plug connection, a magnetic attraction, etc., which can be used to connect the master battery and the sub battery.

## Claims

1. A master battery pack (22) for a power tool, adapted to be connected to an external secondary battery pack (24), the master battery pack comprising:
a case (26);
a battery cell located in the case;
a first connector on the case having a first mechanical structure for removably attaching and securing the master battery pack to an external power tool or an external charger, the first connector electrically connected to the battery cell; the first connector comprising a first positive terminal (28a) and a first negative terminal (28d); and
a second connector on the case, the second connector electrically connected to the battery cell; the second connector comprising a second positive terminal (38a) and a second negative terminal (38d);
wherein the second connector further comprises a communication terminal (28b, 38b) that allows the master battery pack to exchange information with the secondary battery pack
wherein the case (26) further comprises a second mechanical structure for removably attaching and securing the secondary battery pack (24) to the master battery pack.

2. The master battery pack (22) according to claim 1, wherein the communication terminals (28b, 38b) are adapted to exchange information on battery packs such as voltage, temperature, power.

3. The master battery pack (22) according to claim 1 or 2, wherein the communication terminals (28b, 38b) are further adapted to exchange information with an external power tool.

4. The master battery pack (22) according to any one of claims 1 to 3, wherein the communication terminals (28b, 38b) are further adapted to exchange information with an external charger.

5. A secondary battery pack (24) for a power tool, adapted to connect to an external master battery pack (22), the secondary battery pack comprising:
a case (42);
a battery cell located in the case;
a connecting terminal on the case, the connecting terminal electrically connected to the battery cell, the connecting terminal comprising a positive terminal (54a) and a negative terminal (54d);
wherein the secondary battery pack comprises only one mechanical structure; the mechanical structure configured for releasably attaching and securing the secondary battery pack to the master battery pack; the connecting terminal further comprising a communication terminal (54b) that allows the secondary battery pack to exchange information with the master battery pack.

6. The secondary battery pack (24) according to claim 5, wherein the communication terminal (54b) is adapted to exchange information on batteries such as voltage, temperature, power.

7. A battery pack (20), comprising the master battery pack (22) according to any one of the claims 1-4 and the secondary battery pack (24) according to claim 5 or 6.

8. The battery pack (20) according to claim 7, wherein the master battery pack (22) and the secondary battery pack (24) are removably connected to each other.

## Patentansprüche

1. Master-Batteriepack (22) für ein Elektrowerkzeug, das dazu angepasst ist, mit einem externen sekundären Batteriepack (24) verbunden zu werden, wobei das Master-Batteriepack umfasst:
ein Gehäuse (26);
eine in dem Gehäuse befindliche Batteriezelle;
einen ersten Verbinder an dem Gehäuse, das eine erste mechanische Struktur zum lösbaren Anbringen und Sichern des Master-Batteriepacks an einem externen Elektrowerkzeug oder einem externen Ladegerät aufweist, wobei der erste Verbinder mit der Batteriezelle elektrisch verbunden ist; wobei der erste Verbinder einen ersten positiven Anschluss (28a) und einen ersten negativen Anschluss (28d) umfasst; und
einen zweiten Verbinder auf dem Gehäuse, wobei der zweite Verbinder mit der Batteriezelle elektrisch verbunden ist; wobei der zweite Verbinder einen zweiten positiven Anschluss (38a) und einen zweiten negativen Anschluss (38d) umfasst;
wobei der zweite Verbinder ferner einen Kommunikationsanschluss (28b, 38b) umfasst, der es dem Master-Batteriepack ermöglicht, Informationen mit dem sekundären Batteriepack auszutauschen,
wobei das Gehäuse (26) ferner eine zweite mechanische Struktur zum lösbaren Anbringen und Sichern des sekundären Batteriepacks (24) an dem Master-Batteriepack umfasst.

2. Master-Batteriepack (22) nach Anspruch 1, wobei die Kommunikationsanschlüsse (28b, 38b) dazu angepasst sind, Informationen über Batteriepacks auszutauschen, wie Spannung, Temperatur, Leistung.

3. Master-Batteriepack (22) nach Anspruch 1 oder 2, wobei die Kommunikationsanschlüsse (28b, 38b) ferner dazu angepasst sind, Informationen mit einem externen Elektrowerkzeug auszutauschen.

4. Master-Batteriepack (22) nach einem der Ansprüche 1 bis 3, wobei die Kommunikationsanschlüsse (28b, 38b) ferner dazu angepasst sind, Informationen mit einem externen Ladegerät auszutauschen.

5. Sekundäres Batteriepack (24) für ein Elektrowerkzeug, das dazu angepasst ist, mit einem externen Master-Batteriepack (22) verbunden zu werden, wobei das sekundäre Batteriepack umfasst:
ein Gehäuse (42);
eine in dem Gehäuse befindliche Batteriezelle;
einen Verbindungsanschluss auf dem Gehäuse, wobei der Verbindungsanschluss mit der Batteriezelle elektrisch verbunden ist, wobei der Verbindungsanschluss einen positiven Anschluss (54a) und einen negativen Anschluss (54d) umfasst;
wobei das sekundäre Batteriepack nur eine mechanische Struktur umfasst; wobei die mechanische Struktur zum lösbaren Anbringen und Sichern des sekundären Batteriepacks an dem Master-Batteriepack konfiguriert ist; wobei der Verbindungsanschluss ferner einen Kommunikationsanschluss (54b) umfasst, der es dem sekundären Batteriepack ermöglicht, Informationen mit dem Master-Batteriepack auszutauschen.

6. Sekundäres Batteriepack (24) nach Anspruch 5, wobei der Kommunikationsanschluss (54b) dazu angepasst ist, Informationen über Batterien auszutauschen, wie Spannung, Temperatur, Leistung.

7. Batteriepack (20), umfassend das Master-Batteriepack (22) nach einem der Ansprüche 1 bis 4 und das sekundäre Batteriepack (24) nach Anspruch 5 oder 6.

8. Batteriepack (20) nach Anspruch 7, wobei das Master-Batteriepack (22) und das sekundäre Batteriepack (24) abnehmbar miteinander verbunden sind.

## Revendications

1. Bloc-batterie principal (22) pour un outil électrique, adapté pour être connecté à un bloc-batterie secondaire externe (24), le bloc-batterie principal comprenant :
un boîtier (26) ;
une cellule de batterie située dans le boîtier ;
un premier connecteur sur le boîtier présentant une première structure mécanique pour fixer de manière amovible et assujettir le bloc-batterie principal à un outil électrique externe ou un chargeur externe, le premier connecteur étant connecté électriquement à la cellule de batterie ; le premier connecteur comprenant une première borne positive (28a) et une première borne négative (28d) ; et
un second connecteur sur le boîtier, le second connecteur étant connecté électriquement à la cellule de batterie ; le second connecteur comprenant une seconde borne positive (38a) et une seconde borne négative (38d) ;
dans lequel le second connecteur comprend en outre une borne de communication (28b, 38b) qui permet au bloc-batterie principal d'échanger des informations avec le bloc-batterie secondaire
dans lequel le boîtier (26) comprend en outre une seconde structure mécanique pour fixer de manière amovible et assujettir le bloc-batterie secondaire (24) au bloc-batterie principal.

2. Bloc-batterie principal (22) selon la revendication 1, dans lequel les bornes de communication (28b, 38b) sont adaptées pour échanger des informations sur les blocs-batteries telles que la tension, la température, la puissance.

3. Bloc-batterie principal (22) selon la revendication 1 ou 2, dans lequel les bornes de communication (28b, 38b) sont en outre adaptées pour échanger des informations avec un outil électrique externe.

4. Bloc-batterie principal (22) selon l'une quelconque des revendications 1 à 3, dans lequel les bornes de communication (28b, 38b) sont en outre adaptées pour échanger des informations avec un chargeur externe.

5. Bloc-batterie secondaire (24) pour un outil électrique, adapté pour se connecter à un bloc-batterie principal externe (22), le bloc-batterie secondaire comprenant :
un boîtier (42) ;
une cellule de batterie située dans le boîtier ;
une borne de connexion sur le boîtier, la borne de connexion étant connectée électriquement à la cellule de batterie, la borne de connexion comprenant une borne positive (54a) et une borne négative (54d) ;
dans lequel le bloc-batterie secondaire ne comprend qu'une seule structure mécanique ; la structure mécanique étant configurée pour fixer de manière amovible et assujettir le bloc-batterie secondaire au bloc-batterie principal ; la borne de connexion comprenant en outre une borne de communication (54b) qui permet au bloc-batterie secondaire d'échanger des informations avec le bloc-batterie principal.

6. Bloc-batterie secondaire (24) selon la revendication 5, dans lequel la borne de communication (54b) est adaptée pour échanger des informations sur des batteries telles que la tension, la température, la puissance.

7. Bloc-batterie (20), comprenant le bloc-batterie principal (22) selon l'une quelconque des revendications 1 à 4 et le bloc-batterie secondaire (24) selon la revendication 5 ou 6.

8. Bloc-batterie (20) selon la revendication 7, dans lequel le bloc-batterie principal (22) et le bloc-batterie secondaire (24) sont connectés l'un à l'autre de manière amovible.
